# FASCICULE DE BREVET EUROPEEN

(11) **EP 3 794 439 B1**
(45) Date de publication et mention de la délivrance du brevet: **04.06.2025**
(21) Numéro de dépôt: 19742424.5
(22) Date de dépôt: 13.05.2019
(51) Int. Cl.: G06F 3/147, G09G 5/00, G06T 3/00, G06T 11/60, H04N 5/28, H04N 7/14

(54) **PROCÉDÉ ET SYSTÈME POUR TÉLÉTRANSMETTRE VERS UN SITE DE TRAITEMENT UN FLUX VIDÉO CAPTÉ SUR UN SITE D'INTERVENTION DISTANT**
VERFAHREN UND SYSTEM ZUR FERNÜBERTRAGUNG EINES AUF EINER ENTFERNTEN INTERVENTIONSSTELLE ERFASSTEN VIDEOSTROMS AN EINE VERARBEITUNGSSTELLE
METHOD AND SYSTEM FOR TELETRANSMITTING TO A PROCESSING SITE A VIDEO STREAM CAPTURED ON A REMOTE INTERVENTION SITE

(30) Priorité: 14.05.2018 FR 1854006
(43) Date de publication de la demande: 24.03.2021
(73) Titulaire: Dassault Systèmes, 78140 Vélizy-Villacoublay (FR)
(72) Inventeur: JOUSSEMET, Lionnel, 92160 ANTONY (FR)
(74) Mandataire: Atout PI Laplace
(86) Numéro de dépôt international: PCT/FR2019/051070
(87) Numéro de publication internationale: WO 2019/220043

(56) Documents cités:
- US-A1- 2017 300 757

## Description

### Domaine de l'invention

La présente invention concerne un procédé pour télétransmettre vers un site de traitement un flux vidéo capté sur un site d'intervention distant. Elle vise également un système implémentant ce procédé de télétransmission.

Un domaine particulier de l'invention est celui de la téléassistance pour des opérations de toutes natures menées sur des sites d'intervention distants, notamment des opérations industrielles telles que des opérations de maintenance préventive ou curative ou des opérations d'inspection.

Un autre domaine de l'invention est celui de la télétransmission de flux vidéo captés à partir de plateformes mobiles, terrestres, aériennes ou aquatiques, notamment à des fins d'inspection.

### Etat de la technique

La télétransmission d'informations depuis un site d'intervention distant est actuellement réalisée en utilisant de nombreux vecteurs de communication, qu'ils soient filaires via des réseaux de communication ou non filaires en utilisant des technologies de communication hertzienne ou satellite.

Dans le domaine de la téléassistance, les informations télétransmises comprennent généralement des flux vidéo générés à partir d'équipements de captation vidéo utilisés par un opérateur de terrain.

En téléassistance vidéo, les opérateurs terrain embarquent une caméra destinée à capter un flux d'images d'un équipement sur lequel intervenir ou réaliser des opérations. La téléassistance peut être soit synchrone soit asynchrone. Le flux vidéo est transmis par des moyens de communication numérique, tels que le réseau IP via satellite ou un réseau terrestre.
Le télé-expert reçoit le flux, l'analyse et renvoie à l'opérateur des éléments d'information pour l'assister. Ces éléments peuvent comprendre des données multimédia et/ou des instructions de procédure.

Le document EP2765502A1 divulgue ainsi un procédé de téléassistance contribuant à apporter de l'information augmentée à un opérateur de terrain.

Le document WO2009128781 divulgue aussi un procédé et dispositif de visualisation à distance.

Le document US2017/300757A1 divulgue un procédé et un système de capture d'image procurant une protection de la confidentialité et de la vie privée. Il ne décrit pas une assistance à distance d'un opérateur de terrain sur une scène d'intervention, aucun flux d'information n'étant prévu du site de traitement vers la scène d'intervention.

Le document US 2017/0300757 A1 divulgue un procédé de fourniture de données d'obscuration comprenant une réception de données d'image comprenant une image d'une cible et une réception de paramètre de préférence correspondant à la cible. Les données d'obscuration d'au moins une partie des données d'image correspondant à la cible sont déterminées à l'aide du paramètre de préférence reçu. Ce document divulgue un procédé de fourniture de données d'images de surveillance, comprenant une capture de données d'image incluant l'image d'une cible, une interrogation d'une base de données pour recevoir un paramètre de préférence correspondant à la cible, une détermination des données d'obscuration de la partie des données d'image, et une modification sélective des données d'image reçues selon les données d'obscuration déterminées, pour fournir les données d'image de surveillance.

Un inconvénient des procédés actuels réside dans une trop forte exhaustivité de l'information transmise. L'information captée et transmise peut contenir des informations superflues, voire secrètes, qui peuvent présenter des risques en termes de sécurité des installations ou d'intelligence économique ou technologique.

Le but de la présente invention est de proposer un procédé de télétransmission visant à réduire la transmission d'informations aux seules données nécessaires et suffisantes pour mener à bien une intervention ou une inspection. Un autre but de l'invention est d'optimiser la quantité de données transmises pendant l'opération de télétransmission et ainsi d'être moins sensible aux limitations technologiques des réseaux de communication employés.

### Résumé de l'invention

L'invention est exposée dans le jeu de revendications modifié.

Ainsi, il devient possible d'éviter que des informations sensibles contenues dans la scène d'intervention ou sur l'ensemble lui-même puissent être interceptées sur les canaux de communication utilisés entre un site d'intervention et un site d'expertise. Ces informations sensibles peuvent être par exemple des informations portant sur un lieu géographique, un bâtiment ou un équipement identifiable visuellement. Elles peuvent être aussi des informations contenues dans une étiquette ou tout autre support apposé sur l'ensemble faisant l'objet d'une intervention. Elles peuvent aussi être de nature contextuelle, telle que des conditions d'éclairage naturel ou artificiel ou des conditions atmosphériques ou climatiques.

On peut ainsi, en utilisant le procédé de télétransmission selon l'invention, proposer un outil de téléassistance sur des sites d'intervention sensibles, qui limite considérablement le risque d'interception de données confidentielles par des tiers lors de la télétransmission d'informations, notamment d'images ou de flux vidéo, émises par un opérateur intervenant sur site.

### Description technique détaillée

D'autres avantages et particularités de l'invention apparaîtront à la lecture de la description détaillée de mises en œuvre et de modes de réalisation nullement limitatifs, et des dessins annexés suivants :
- la Figure 1 illustre schématiquement un système de télétransmission selon l'invention ;
- la Figure 2 illustre schématiquement un premier mode de mise en œuvre du procédé de télétransmission selon l'invention pour une opération de téléassistance ;
- la Figure 3 illustre schématiquement un exemple particulier d'une scène d'intervention exploitée avec le procédé de télétransmission selon l'invention ;
- la Figure 4 illustre schématiquement un second mode de mise en œuvre du procédé de télétransmission selon l'invention, dans le contexte d'intervention représenté en Figure 3 ;
- la Figure 5 illustre schématiquement un troisième mode de mise en œuvre du procédé de télétransmission selon l'invention, incluant des substitutions de flux vidéo ; et
la figure 6 illustre schématiquement une application particulière d'un système de télétransmission selon l'invention, embarqué dans un drone d'inspection.

Les modes de réalisation décrits ci-après étant nullement limitatifs, on pourra notamment considérer des variantes de l'invention ne comprenant qu'une sélection de caractéristiques décrites, isolées des autres caractéristiques décrites (même si cette sélection est isolée au sein d'une phrase comprenant ces autres caractéristiques), si cette sélection de caractéristiques est suffisante pour conférer un avantage technique ou pour différencier l'invention par rapport à l'état de la technique antérieure. Cette sélection comprend au moins une caractéristique, de préférence fonctionnelle sans détails structurels, ou avec seulement une partie des détails structurels si cette partie uniquement est suffisante pour conférer un avantage technique ou pour différencier l'invention par rapport à l'état de la technique antérieure.

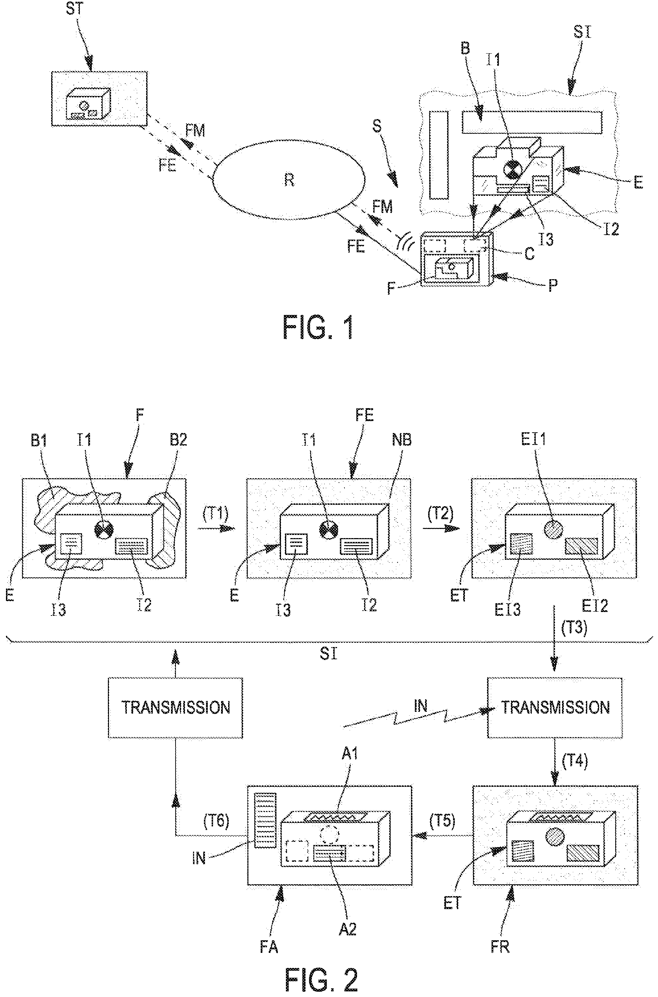

En référence à la Figure 1, un système S de télétransmission comprend un équipement portatif P pourvu d'une caméra, d'une unité de traitement d'information, d'un écran procurant une interface graphique et d'un module de communication sans fil. Cet équipement portatif peut être réalisée à partir de dispositifs conventionnels, tels que des tablettes ou lunettes connectées, ou peut être conçu spécifiquement pour un usage donné. Cet équipement portatif P intègre des moyens logiciels conçus pour traiter un flux vidéo capté au moyen de la caméra.

Un opérateur de terrain (non représenté) intervenant sur une scène d'intervention SI utilise l'équipement portatif P pour réaliser une vidéo de cette scène d'intervention et plus particulièrement d'un ensemble technique E disposé dans cette scène d'intervention SI. Le flux vidéo ainsi capté comprend à la fois l'ensemble E et un arrière-plan B.

Le procédé de télétransmission selon l'invention est mis en œuvre dans un module logiciel embarqué dans l'équipement portatif P. Ce procédé est configuré pour modifier le flux capté F de telle façon que des zones d'intérêt 11, 12, 13 visibles sur l'ensemble E soient effacées du flux. Le Flux FM ainsi modifié peut ensuite être transmis via un réseau de communication non nécessairement sécurisé de bout en bout jusqu'à un site distant de télétraitement ST. Le flux modifié FM ainsi reçu est alors traité de manière à être enrichi, par exemple par des techniques de réalité augmentée, puis être retourné sous la forme d'un flux enrichi FE vers l'équipement portatif P de l'opérateur de terrain.

On va maintenant décrire, en référence à la Figure 2, les différentes étapes du procédé de télétransmission selon l'invention mis en œuvre dans la configuration de la Figure 1.

Le flux F capté par le capteur C de l'équipement portatif P, potentiellement une caméra, comprend à la fois une image de l'ensemble E incluant des zones d'intérêt 11, 12, 13 et des éléments B1, B2 d'arrière-plan.

Les zones d'intérêt dont la transmission n'est pas souhaitée peuvent par exemple inclure un graphisme ou un logo I1 représentatif d'un risque ou d'une fonction spécifique. Ces zones d'intérêt peuvent aussi inclure des étiquettes ou cartouches contenant des informations critiques 12, 13.

Une première étape de traitement T1 est conçue pour identifier l'ensemble E au sein de la scène d'intervention et de l'extraire pour obtenir un flux vidéo d'extraction FE avec un arrière-plan NB neutre ne contenant plus d'information exploitable.

Plusieurs procédés d'extraction dans un flux vidéo sont déjà disponibles dans l'état de la technique. On peut notamment citer le document US 2013/0093788 A1 qui divulgue un procédé pour faire disparaître un objet réel dans un affichage en réalité mixte.

La neutralisation d'un sous-ensemble de l'image (arrière-plan de l'objet observé, éléments signalétiques, ou autres) consiste en l'application au(x) groupe(s) de pixels composant ledit sous-ensemble, de propriétés colorimétriques neutres. En d'autres termes, les propriétés desdits pixels, généralement définies par des valeurs flottantes (exemple : RGB), se voient affecter une même couleur. Dans une seconde étape de traitement T2, les zones d'intérêt 11, 12, 13 sont identifiées puis effacées du flux vidéo FE pour obtenir un flux vidéo traité FT dans lequel l'ensemble ainsi traité ET ne contient plus les zones d'intérêt qui sont remplacées par des zones effacées EI1, EI2 et EI3.

Un flux vidéo consiste en une succession d'images classiquement composées de pixels ordonnés en lignes et colonnes. L'identification d'un ensemble connu a priori au sein d'un flux vidéo consiste ainsi en la détermination, pour chacune des images composant ledit flux, d'un ou plusieurs sous-ensembles de pixels correspondant à des zones (au sens pixélique) sur lesquelles ledit ensemble apparaît.

L'identification d'un ensemble connu a priori, tel que les zones d'intérêt 11, 12, 13, peut être faite de manière automatique et déterministe dès lors que la position de la caméra à l'origine de l'acquisition relativement audit ensemble est connue (au sens spatial), ainsi que les caractéristiques intrinsèques de ladite caméra.

La position de la caméra relativement à l'ensemble connu a priori peut être faite au travers d'un recalage basé modèle consistant en la détermination de ladite position selon une approche d'optimisation visant à mettre en regard, localement et globalement, l'ensemble tel qu'observé et sa représentation géométrique connue a priori.

La localisation peut également se faire de manière plus triviale en localisant la caméra dans le repère d'un amer visuel facilement identifiable et localisable (on parle par exemple de marqueurs de type datamatrix), amer dont la position est connue dans le repère de l'ensemble à identifier (au sens spatial).

En fonction de leur typologie (arrière-plan, plaque signalétique, logo, ou autres), les zones d'intérêt à effacer peuvent être colorisées de différentes manières. Mais on peut aussi prévoir que ces zones effacées apparaissent désormais comme transparentes dans le flux vidéo traité à transmettre.

Ce flux ainsi traité - avec un arrière-plan neutre et des zones d'intérêt effacées - est alors transmis (T3). Si une tentative d'interception IN devait aboutir sur le flux vidéo modifié FT en cours de transmission, le préjudice informationnel serait nécessairement réduit car le flux intercepté serait difficilement exploitable pour déterminer la localisation de la scène d'intervention.

Le site de traitement distant ST reçoit (T4) ce flux vidéo modifié représentant l'image traitée ET de l'ensemble E. Le flux vidéo reçu FR est alors traité (T5) de sorte qu'il se trouve augmenté ou enrichi par ajout d'informations A1, A2 et d'instructions ou de consignes IN. Le flux vidéo ainsi augmenté FA peut alors être transmis (T6) vers l'équipement portatif P de l'opérateur de terrain.

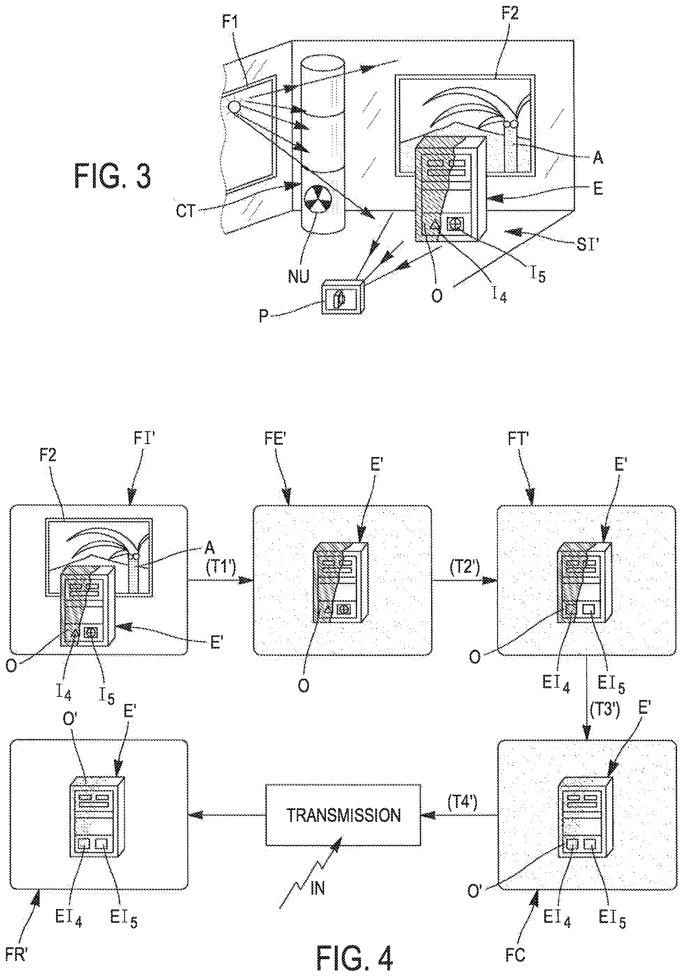

Le procédé de télétransmission selon l'invention peut aussi être mis en œuvre pour supprimer dans le flux vidéo transmis toute information de contexte liée à une scène d'intervention, en référence aux Figures 3 et 4.

Une scène d'intervention SI' comprend à titre d'exemple non limitatif un équipement E' installé dans une pièce pourvue de deux fenêtres F1, F2. Un objet de grande dimension CT, placé au voisinage de l'ensemble E, provoque une ombre portée O sur l'équipement E' du fait d'un rayonnement solaire à travers la première fenêtre F1. La seconde fenêtre F2 située derrière l'ensemble E' donne sur un paysage caractéristique incluant par exemple un arbre typique de la végétation du lieu. Par ailleurs, l'ensemble E' comporte lui-même deux zones d'intérêt 14, 15 dont la transmission n'est pas souhaitée.

L'objet de grande dimension CT peut être par exemple pourvu d'une étiquette NU indiquant la présence de composants ou matériaux radioactifs. Si l'opérateur de terrain est conduit à produire un flux vidéo contenant cette objet CT, ce flux vidéo sera alors traité de façon à effacer le contenu de l'étiquette NU préalablement identifiée, dans le flux vidéo qui sera télétransmis.

Le flux FI' capté par la caméra de l'équipement portatif P comprend à la fois l'ombre portée O et une vue du paysage d'arrière-plan visible à travers la fenêtre F2. Cette ombre et ce paysage pourraient être exploités par un tiers non autorisé interceptant le flux transmis, dans le but de déterminer la localisation de la scène d'intervention. Il est donc essentiel d'éviter la transmission de ces informations contextuelles.

Une première étape (T1') contribue à extraire du flux vidéo FI' la seule image vidéo de l'ensemble E' qui se retrouve alors avec un arrière-plan neutre. Le flux d'extraction FE' est ensuite traité (étape T2') de façon à effacer les deux zones d'intérêt 14, 15. Le flux ainsi traité FT' comprend alors une image vidéo de l'ensemble E' comportant deux zones effacées EI4, E15.

Une troisième étape (T3') a pour fonction d'atténuer ou de modifier l'ombre portée O de façon à générer un flux vidéo corrigé FC qui comporte des informations modifiées sur les conditions d'éclairement solaire, par exemple au moyen de filtres optiques ou numériques conçus pour atténuer très sensiblement les effets d'ombre ou les spécularités qui deviennent alors difficilement interprétables pour un tiers qui intercepterait le flux vidéo après traitement. Ce flux vidéo corrigé FC, comprenant des zones substituées EI4, EI5 et une ombre atténuée O', peut alors être transmis (étape T4') via le réseau de communication et être reçu par le site de traitement ST sous la forme d'un flux vidéo reçu FR'.

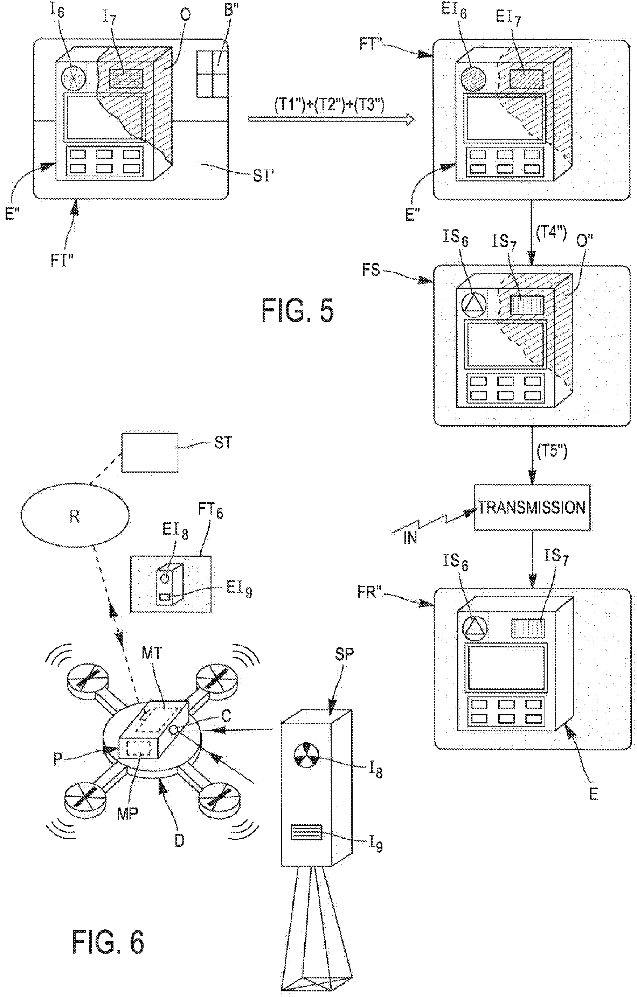

On peut aussi prévoir, en référence à la Figure 5, un troisième mode de mise en œuvre du procédé de télétransmission selon l'invention, dans lequel le flux vidéo effectivement transmis ne comprend plus des zones d'intérêt mais inclut des zones substituées et éventuellement une ombre portée sensiblement atténuée ou modifiée au moyen de filtres optiques ou numériques. L'objectif recherché est alors d'induire en erreur un tiers non autorisé qui intercepterait le flux vidéo transmis.

Un opérateur de terrain a capté au moyen de son équipement portatif P un flux vidéo FI" représentant dans une scène d'intervention SI" un ensemble E" devant un arrière-plan B", cet ensemble E" comportant par exemple deux zones d'intérêt 16, 17.

Des étapes de traitement T1", T2", T3" - semblables à celles T1', T2', T3' qui viennent d'être décrites en référence à la Figure 4 - permettent respectivement et successivement une extraction de l'ensemble E" hors de son arrière-plan, un effacement des zones d'intérêt 16, 17, et un traitement par filtrage de l'ombre portée O sur l'ensemble E". On obtient ainsi un flux vidéo traité FT" comportant une version traitée O" de l'ombre portée.

En vue de compromettre l'exploitation des portions d'images véhiculées, plusieurs traitements infographiques conventionnels peuvent être employés. En jouant de manière aléatoire sur les propriétés des images au sein d'un flux vidéo (gamma, exposition, contraste, luminosité) avant leur transmission, on est ainsi en mesure de limiter drastiquement la capacité d'interprétation de celles-ci quant au contexte de capture (éclairage naturel vs artificiel, orientation de la lumière, etc.).

En complément de la neutralisation des propriétés des images, il est également envisageable d'appliquer des textures additionnelles préalablement calculées sur la base de rendus 3D. Ainsi, des ombres portées crédibles mais non-présentes dans la réalité observée peuvent être incrustées dans l'image transmise, faussant son interprétation par un potentiel intercepteur.

Une nouvelle étape de traitement (T4") est conçue pour substituer aux zones d'intérêt réelles 16, 17 des zones d'intérêt fictives IS6, IS7.

Il peut par exemple s'agir d'appliquer une couleur unie à un ensemble de pixels dont on souhaite supprimer l'information sémantique qu'ils portent.

On obtient ainsi un flux vidéo substitué FS qui peut alors être transmis (T5") via un réseau de communication vers le site de traitement ST qui reçoit un flux vidéo FR" incluant à la fois une image modifiée de l'ensemble E". En cas d'interception indésirable lors de la transmission du flux vidéo substitué FS, son exploitation devrait conduire à des interprétations erronées permettant ainsi de protéger les sources d'information sur la localisation réelle de la scène d'intervention.

Un système de télétransmission selon l'invention peut également être embarqué au sein d'une plateforme mobile P portée par un drone d'inspection D, comme l'illustre la figure 6. Ce drone D est par exemple prévu pour inspecter un équipement technique SP comportant, sur une ou plusieurs de ses faces, des zones d'information 18, 19 dont la transmission n'est pas souhaitée car leur interception par des tiers serait préjudiciable. Par exemple la zone 18 peut être un symbole indiquant la présence de matériaux ou composants radioactifs tandis que la zone 19 peut comporter des données relatives à l'origine de cet équipement technique.

Lorsque le drone d'inspection D approche l'équipement technique SP, sa caméra C capte un flux vidéo correspondant à des objectifs d'inspection. Un processeur MP intégré dans la plateforme mobile P traite localement ce flux vidéo, identifie les zones d'intérêt 18, 19 en tant que formes correspondant à des formes prédéterminées et efface ces zones d'intérêt. Le flux vidéo ainsi traité FT6, incluant des zones effacées EI8, EI9, est ensuite transmis via une unité de transmission sans fil MT vers un réseau de communication R puis acheminé vers un site de traitement ST. Ce drone peut être commandé par un opérateur intervenant sur un site.

## Revendications

1. Procédé pour télétransmettre vers un site de traitement (ST) un flux vidéo (F) capté sur une scène d'intervention distante (SI), comprenant un traitement de ce flux vidéo (F) de façon à en effacer des zones déterminées (11, 12, 13), puis une transmission dudit flux ainsi traité (FM) vers ledit site de traitement (ST), mis en œuvre pour assister à distance un opérateur de terrain en intervention sur un ensemble ou objet (E, E', E") ayant une forme géométrique connue dans ladite scène d'intervention distante,
**caractérisé en ce qu'**il comprend en outre les étapes de :
- captation, par une caméra d'un équipement portatif utilisé par l'opérateur de terrain, d'un flux vidéo (F) portant sur une scène d'intervention (SI, SI', SI") incluant ledit ensemble ou objet (E, E', E"),
- extraction (T1, T1'), dans ledit flux vidéo ainsi capté, d'un flux limité (FE, FE') audit ensemble ou objet (E, E', E'') avec un arrière-plan neutre
- traitement (T2, T2') de ce flux vidéo extrait, comprenant un effacement de zones déterminées (11, 12, 13 ; 14, 15 ; 16, 17) au sein dudit ensemble ou objet (E, E', E"), par colorisation ou mise en transparence,
- transmission de ce flux vidéo ainsi traité vers un site de téléassistance (ST) via un réseau de communication,traitement (T5) de ce flux sur ledit site de téléassistance (ST), comprenant un enrichissement dudit flux par des techniques de réalité augmentée et/ou une génération d'une consigne d'assistance,
- transmission dudit flux enrichi (FA) et/ou de ladite consigne (IN) depuis le site de téléassistance (ST) vers l'équipement portatif de l'opérateur de terrain,,
- visualisation dudit flux enrichi et/ou de ladite consigne d'assistance sur un écran au sein dudit équipement portatif ou sur des lunettes connectées, et **en ce que** l'étape de traitement du flux vidéo extrait comprend en outre une étape pour modifier, par des filtres optiques ou numériques, des caractéristiques contextuelles du contenu du flux vidéo (FI') qui sont extrinsèques à l'objet ou ensemble (E') identifié et/ou qui sont porteuses d'informations sémantiques inhérentes à l'environnement dudit objet ou ensemble (E').

2. Procédé selon la revendication précédente, **caractérisé en ce que** l'étape de traitement (2) comprend une étape pour identifier au sein de l'ensemble ou de l'objet extrait au moins une zone d'intérêt (11, 12, 13) contenant des informations sensibles et une étape pour effacer cette au moins une zone d'intérêt (11, 12, 13) au sein du flux vidéo à transmettre.

3. Procédé selon la revendication précédente, **caractérisé en ce que** la au moins une zone d'intérêt (11 ; 12, 13) contenant des informations sensibles est préalablement connue.

4. Procédé selon la revendication précédente, **caractérisé en ce que** la au moins une zone d'intérêt contenant des informations sensibles (11, 12, 13) est identifiée au niveau du site d'intervention (SI).

5. Procédé selon la revendication précédente, **caractérisé en ce que** l'identification de la au moins une zone d'intérêt (11, 12, 13) contenant des informations sensibles est effectuée par un opérateur de terrain via une interface graphique adaptée.

6. Procédé selon la revendication précédente, **caractérisé en ce que** l'identification de la au moins une zone d'intérêt (11, 12, 13) contenant des informations sensibles est effectuée de manière automatique.

7. Procédé selon l'une quelconque des revendications précédentes, **caractérisé en ce que** l'étape de traitement comprend une étape pour substituer à une zone d'intérêt (16, 17) contenant des informations sensibles, un contenu substitutif (EI6, E17) pouvant être transmis vers le site de traitement (ST).

8. Procédé selon l'une quelconque des revendications précédentes, **caractérisé en ce que** le flux vidéo est capté à partir d'une plateforme mobile par rapport à la scène d'intervention.

9. Système (S) pour télétransmettre vers un site de traitement un flux vidéo capté sur une scène d'intervention distante (SI) par des moyens de captation de flux vidéo, mettant en œuvre le procédé de télétransmission selon l'une quelconque des revendications précédentes, comprenant, sur ladite scène d'intervention (SI), des moyens pour traiter ce flux vidéo de façon à en effacer des zones déterminées (11, 12, 13) et des moyens pour transmettre ledit flux ainsi traité vers ledit site de traitement (ST), mis en œuvre pour assister à distance, depuis un site de téléassistance (ST), un opérateur de terrain en intervention dans un site local (SI) sur un ensemble ou objet (E) ayant une forme géométrique connue,, **caractérisé en ce qu'**il comprend en outre sur ledit site d'intervention (SI):
- des moyens (P) pour capter un flux vidéo portant sur une scène d'intervention (SI) incluant ledit ensemble ou objet (E),
- des moyens pour traiter ce flux vidéo capté comprenant des moyens pour effacer des zones déterminées (11, 12, 13),
- des moyens pour transmettre ce flux vidéo ainsi traité vers le site de téléassistance (ST), **caractérisé en ce qu'**il comprend en outre :
- sur ledit site de téléassistance (ST):
- des moyens pour traiter ce flux, en vue d'un enrichissement dudit flux et/ou d'une génération d'une consigne,
- des moyens pour transmettre ledit flux enrichi et/ou ladite consigne depuis le site de téléassistance (ST) vers l'équipement portatif de l'opérateur de terrain, ledit équipement portatif étant pourvu d'un écran et/ou de lunettes connectées pour visualiser ledit flux enrichi et/ou ladite consigne.
- et ce que les moyens de traitement de l'ensemble ou objet extrait comprennent des moyens pour modifier des caractéristiques contextuelles du contenu du flux vidéo qui sont extrinsèques à l'objet ou ensemble identifié et/ou qui sont porteuses d'informations sémantiques inhérentes à l'environnement dudit objet ou ensemble.

10. Système selon la revendication précédente, dans lequel le flux vidéo vise un ensemble ou objet (E) spécifique au sein de la scène d'intervention distante (SI), **caractérisé en ce qu'**il comprend en outre :
- des moyens pour identifier ledit ensemble ou objet (E) au sein du flux vidéo, et
- des moyens pour extraire un flux vidéo limité à l'ensemble ou objet spécifique (E) identifié.

11. Système selon l'une des revendications 9 ou 10, **caractérisé en ce que** les moyens de traitement comprennent des moyens pour identifier au sein de l'ensemble ou de l'objet extrait (E) au moins une zone d'intérêt (11, 12, 13) contenant des informations sensibles et des moyens pour effacer cette au moins une zone d'intérêt (11, 12, 13) au sein du flux vidéo à transmettre.

12. Système selon l'une quelconque des revendications 9 à 11, **caractérisé en ce qu'**il comprend en outre, sur la scène d'intervention (SI), des moyens d'interface graphique (P) adaptés pour permettre à un opérateur de terrain d'identifier la au moins une zone d'intérêt (11, 12, 13) contenant des informations sensibles.

13. Système selon l'une quelconque des revendications 9 à 12, **caractérisé en ce que** les moyens de captation, de traitement et de transmission du flux vidéo sont embarqués sur une plateforme mobile par rapport à la scène d'intervention.

14. Utilisation du procédé de télétransmission selon l'une quelconque des revendications 1 à 8, dans un outil de téléassistance dédié à des opérateurs intervenant sur des sites d'intervention sensibles.

## Patentansprüche

1. Verfahren zur Fernübertragung eines an einer entfernten Interventionsszene (SI) aufgenommenen Videostroms (F) zu einem Verarbeitungsort (ST), das ein Verarbeiten dieses Videostroms (F) zum Löschen bestimmter Zonen (I1, I2, I3) daraus, dann ein Übertragen des so verarbeiteten Stroms (FM) zum Verarbeitungsort (ST) umfasst, der zum Fernunterstützen eines vor Ort tätigen Bedieners bei einer Intervention an einer Einheit oder einem Objekt (E, E', E") mit einer in der entfernten Interventionsszene bekannten geometrischen Form implementiert ist,
**dadurch gekennzeichnet, dass** es außerdem die folgenden Schritte umfasst:
- Aufnehmen, durch eine Kamera eines von dem Bediener vor Ort verwendeten tragbaren Geräts, eines Videostroms (F), der sich auf eine Interventionsszene (SI, SI', SI") bezieht, die die Einheit oder das Objekt (E, E', E") einschließt,
- Extrahieren (T1, T1'), in dem so aufgenommenen Videostrom, eines Stroms (FE, FE'), der auf die Einheit oder das Objekt (E, E', E") mit einem neutralen Hintergrund beschränkt ist,
- Verarbeiten (T2, T2') dieses extrahierten Videostroms, umfassend ein Löschen bestimmter Zonen (I1, I2, I3; I4, I5; I6, I7) innerhalb der Einheit oder des Objekts (E, E', E"), durch Einfärben oder Transparentmachen,
- Übertragen dieses so verarbeiteten Videostroms zu einem Teleassistenzort (ST) über ein Kommunikationsnetz, Verarbeiten (T5) dieses Stroms an dem Teleassistenzort (ST), umfassend das Anreichern des Stroms durch Erweiterte-Realität-Techniken und/oder Erzeugen einer Assistenzanweisung,
- Übertragen des angereicherten Datenstroms (FA) und/oder der Anweisung (IN) vom Teleassistenzort (ST) zum tragbaren Gerät des Bedieners vor Ort;
- Sichtbarmachen des angereicherten Datenstroms und/oder der Assistenzanweisung auf einem Bildschirm in dem tragbaren Gerät oder auf angeschlossenen Brillen, und dadurch, dass der Schritt des Verarbeitens des extrahierten Videostroms ferner einen Schritt zum Modifizieren, durch optische oder digitale Filter, von Kontextcharakteristiken des Inhalts des Videostroms (FI') umfasst, die für das identifizierte Objekt oder die identifizierte Einheit (E') extrinsisch sind und/oder semantische Informationen tragen, die der Umgebung des Objekts oder der Einheit (E') inhärent sind.

2. Verfahren nach dem vorhergehenden Anspruch, **dadurch gekennzeichnet, dass** der Verarbeitungsschritt (2) einen Schritt zum Identifizieren mindestens einer Zone von Interesse (I1, I2, I3), die sensible Informationen enthält, innerhalb der extrahierten Einheit oder des extrahierten Objekts und einen Schritt zum Löschen dieser mindestens einen Zone von Interesse (I1, I2, I3) innerhalb des zu übertragenden Videostreams umfasst.

3. Verfahren nach dem vorhergehenden Anspruch, **dadurch gekennzeichnet, dass** die mindestens eine sensible Informationen enthaltende Zone von Interesse (I1; I2, I3) im Voraus bekannt ist.

4. Verfahren nach dem vorhergehenden Anspruch, **dadurch gekennzeichnet, dass** die mindestens eine sensible Informationen enthaltende (I1, I2, I3) Zone von Interesse am Interventionsort (SI) identifiziert wird.

5. Verfahren nach dem vorhergehenden Anspruch, **dadurch gekennzeichnet, dass** das Identifizieren der mindestens einen sensible Informationen enthaltenden Zone von Interesse (I1, I2, I3) von einem Bediener vor Ort über eine geeignete grafische Benutzeroberfläche durchgeführt wird.

6. Verfahren nach dem vorhergehenden Anspruch, **dadurch gekennzeichnet, dass** das Identifizieren der mindestens einen sensible Informationen enthaltenden Zone von Interesse (I1, I2, I3) automatisch durchgeführt wird.

7. Verfahren nach einem der vorhergehenden Ansprüche, **dadurch gekennzeichnet, dass** der Verarbeitungsschritt einen Schritt des Ersetzens einer sensible Informationen enthaltenden Zone von Interesse (I6, I7) durch einen Ersatzinhalt (EI6, EI7) umfasst, der zum Verarbeitungsort (ST) übertragen werden kann.

8. Verfahren nach einem der vorhergehenden Ansprüche, **dadurch gekennzeichnet, dass** der Videostream von einer mobilen Plattform in Bezug auf die Interventionsszene aufgenommen wird.

9. System (S) zur Fernübertragung eines an einer entfernten Interventionsszene (SI) mit Videostromaufnahmemitteln aufgenommenen Videostroms zu einem Verarbeitungsort, das das Fernübertragungsverfahren nach einem der vorhergehenden Ansprüche implementiert, das an der Interventionsszene (SI) Folgendes umfasst: Mittel zum Verarbeiten dieses Videostroms zum Löschen bestimmter Zonen (I1, I2, I3) daraus, und Mittel zum Übertragen des so verarbeiteten Stroms zum Verarbeitungsort (ST), implementiert zum Fernunterstützen, von einem Teleassistenzort (ST), eines vor Ort tätigen Bedieners bei einer Intervention an einem lokalen Ort (SI) an einer Einheit oder einem Objekt (E) mit einer bekannten geometrischen Form, **dadurch gekennzeichnet, dass** es ferner am Interventionsort (SI) Folgendes umfasst:
- Mittel (P) zum Aufnehmen eines Videostroms in Bezug auf eine Interventionsszene (SI), die die Einheit oder das Objekt (E) einschließt,
- Mittel zum Verarbeiten dieses aufgenommenen Videostroms, das Mittel zum Löschen der bestimmten Zonen (I1, I2, I3) umfasst,
- Mittel zum Übertragen dieses so verarbeiteten Videostroms zu dem Teleassistenzort (ST), **dadurch gekennzeichnet, dass** es ferner Folgendes umfasst:
- an dem Teleassistenzort (ST):
- Mittel zum Verarbeiten dieses Stroms zum Anreichern des Stroms und/oder Erzeugen einer Anweisung,
- Mittel zum Übertragen des angereicherten Datenstroms und/oder der Anweisung vom Teleassistenzort (ST) zum tragbaren Gerät des Bedieners vor Ort; wobei das tragbare Gerät mit einem Bildschirm oder einer angeschlossenen Brille zum Sichtbarmachen des angereicherten Stroms und/oder der Anweisung ausgestattet ist,
- und dadurch, dass die Mittel des Verarbeitens der extrahierten Einheit oder des extrahierten Objekts Mittel zum Modifizieren von Kontextcharakteristiken des Inhalts des Videostroms umfasst, die für das identifizierte Objekt oder die identifizierte Einheit extrinsisch sind und/oder semantische Informationen tragen, die der Umgebung des Objekts oder der Einheit inhärent sind.

10. System nach dem vorhergehenden Anspruch, bei dem der Videostrom auf ein(e) bestimmte(s) Einheit oder Objekt (E) innerhalb der entfernten Interventionsszene (SI) abzielt, **dadurch gekennzeichnet, dass** es ferner Folgendes umfasst:
- Mittel zum Identifizieren der Einheit oder des Objekts (E) innerhalb des Videostroms, und
- Mittel zum Extrahieren eines auf die identifizierte spezifische Einheit oder das identifizierte spezifische Objekt (E) beschränkten Videostroms.

11. System nach einem von Anspruch 9 oder Anspruch 10, **dadurch gekennzeichnet, dass** die Verarbeitungsmittel Mittel zum Identifizieren, innerhalb der extrahierten Einheit oder des extrahierten Objekts (E), von mindestens einer sensible Informationen enthaltenden Zone von Interesse (I1, I2, I3) und Mittel zum Löschen dieser mindestens einen Zone von Interesse (I1, I2, I3) innerhalb des zu übertragenden Videostroms umfassen.

12. System nach einem der Ansprüche 9 bis 11, **dadurch gekennzeichnet, dass** es ferner in der Interventionsszene (SI) grafische Schnittstellenmittel (P) umfasst, ausgelegt zum Zulassen, dass ein Bediener vor Ort die mindestens eine sensible Informationen enthaltende Zone von Interesse (I1, I2, I3) identifiziert.

13. System nach einem der Ansprüche 9 bis 12, **dadurch gekennzeichnet, dass** die Mittel zum Aufnehmen, Verarbeiten und Übertragen des Videostroms auf einer in Bezug auf die Interventionsszene mobilen Plattform installiert sind.

14. Verwendung des Fernübertragungsverfahrens nach einem der Ansprüche 1 bis 8 in einem Fernunterstützungswerkzeug für Bediener, die an sensiblen Interventionsorten intervenieren.

## Claims

1. A method for teletransmitting to a processing site (ST) a video stream (F) captured at a remote scene of intervention (SI), comprising a processing of said video stream (F) in such a way as to erase specific zones (I1, I2, I3), then a transmission of said stream thus processed (FM) to said processing site (ST), implemented to remotely assist a field operator working on a unit or object (E, E', E'') having a known geometric shape in said remote scene of intervention,
**characterised in that** it further comprises the steps of:
- capturing, by means of a camera of a portable equipment used by the field operator, a video stream (F) relating to an intervention scene (SI, SI', SI") including said unit or object (E, E', E''),
- extracting (T1, T1'), in said video stream thus captured, a limited stream (FE, FE') from said unit or object (E, E', E") with a neutral background,
- processing (T2, T2') said extracted video stream, comprising erasing specific zones (I1, I2, I3; I4, I5; I6, I7) within said unit or object (E, E', E"), by means of colouring or transparency,
- transmitting said video stream thus processed to a teleassistance site (ST) via a communication network, processing (T5) that stream at said teleassistance site (ST), comprising enriching said stream by means of augmented reality techniques and/or generating an assistance instruction,
- transmitting said enriched stream (FA) and/or said instruction (IN) from the teleassistance site (ST) to the portable equipment of the field operator,
- visualising said enriched stream and/or said assistance instruction on a screen within said portable equipment or connected glasses, and **in that** the step of processing the extracted video stream further comprises a step for modifying, by means of optical or digital filters, contextual characteristics of the content of the video stream (FI') that are extrinsic to the identified object or unit (E') and/or that are carriers of semantic information inherent to the environment of said object or unit (E').

2. The method according to the preceding claim, **characterised in that** the processing step (2) comprises a step for identifying, within the extracted unit or object, at least one zone of interest (I1, I2, I3) containing sensitive information and a step for erasing said at least one zone of interest (I1, I2, I3) within the video stream to be transmitted.

3. The method according to the preceding claim, **characterised in that** the at least one zone of interest (I1, I2, I3) containing sensitive information is previously known.

4. The method according to the preceding claim, **characterised in that** the at least one zone of interest containing sensitive information (I1, I2, I3) is identified at the intervention site (SI).

5. The method according to the preceding claim, **characterised in that** the identification of the at least one zone of interest (I1, I2, I3) containing sensitive information is performed by a field operator via a suitable graphic interface.

6. The method according to the preceding claim, **characterised in that** the identification of the at least one zone of interest (I1, I2, I3) containing sensitive information is performed automatically.

7. The method according to any one of the preceding claims, **characterised in that** the processing step comprises a step for substituting for a zone of interest (I6, I7) containing sensitive information a substitutionary content (EI6, EI7) that can be transmitted to the processing site (ST).

8. The method according to any one of the preceding claims, **characterised in that** the video stream is captured from a platform that is mobile relative to the scene of intervention.

9. A system (S) for teletransmitting to a processing site a video stream captured on a remote intervention scene (SI) by video stream capture means, implementing the teletransmission method according to any one of the preceding claims, comprising, on said intervention scene (SI), means for processing said video stream so as to erase specific zones (I1, I2, I3) therefrom and means for transmitting said stream thus processed to said processing site (ST), implemented to remotely assist, from a teleassistance site (ST), a field operator working on a local site (SI) on a unit or object (E) having a known geometric shape, **characterised in that** it further comprises at said intervention site (SI):
- means (P) for capturing a video stream relating to an intervention scene (SI) including said unit or object (E),
- means for processing the captured video stream comprising means for erasing specific zones (I1, I2, I3),
- means for transmitting the video stream thus processed to the teleassistance site (ST), **characterised in that** it further comprises:
- at said teleassistance site (ST):
- means for processing the stream, in view of enriching said stream and/or generating an instruction,
- means for transmitting said enriched stream and/or said instruction from the teleassistance site (ST) to the portable equipment of the field operator, said portable equipment being provided with a screen and/or connected glasses for visualising said enriched stream and/or said instruction,
- and **in that** the processing means of the extracted unit or object comprise means for modifying contextual characteristics of the content of the video stream that are extrinsic to the identified object or unit and/or that are carriers of semantic information inherent to the environment of said object or unit.

10. The system according to the preceding claim, wherein the video stream targets a specific unit or object (E) within the remote intervention scene (SI), **characterised in that** it further comprises:
- means for identifying said unit or object (E) within the video stream, and
- means for extracting a video stream limited to the specific identified unit or object (E).

11. The system according to one of claims 9 or 10, **characterised in that** the processing means comprise means for identifying within the extracted unit or object (E) at least one zone of interest (I1, I2, I3) containing sensitive information and means for erasing this at least one zone of interest (I1, I2, I3) within the video stream to be transmitted.

12. The system according to any one of claims 9 to 11, **characterised in that** it further comprises, on the intervention scene (SI), graphic interface means (P) suitable for enabling a field operator to identify the at least one zone of interest (I1, I2, I3) containing sensitive information.

13. The system according to any one of claims 9 to 12, **characterised in that** the means of capturing, processing, and transmitting the video stream are loaded onto a platform that is movable relative to the scene of intervention.

14. The use of the teletransmission method according to any one of claims 1 to 8, in a teleassistance tool intended for operators working on sensitive intervention sites.
